# EUROPÄISCHE PATENTSCHRIFT

(11) **EP 1 183 107 B1**
(45) Veröffentlichungstag und Bekanntmachung des Hinweises auf die Patenterteilung: **10.12.2003**
(21) Anmeldenummer: 00920709.3
(22) Anmeldetag: 14.04.2000
(51) Int. Cl.: B05D 5/08

(54) **MIT EINER MIKROSTRUKTURIERTEN OBERFLÄCHE VERSEHENE SUBSTRATE, VERFAHREN ZU IHRER HERSTELLUNG UND IHRE VERWENDUNG**
SUBSTRATES PROVIDED WITH A MICROSTRUCTURED SURFACE, METHODS FOR THE PRODUCTION THEREOF, AND THEIR USE
SUBSTRATS MUNIS D'UNE SURFACE MICROSTRUCTUREE, PROCEDE PERMETTANT DE LES PRODUIRE ET LEUR UTILISATION

(30) Priorität: 16.04.1999 DE 19917366
(43) Veröffentlichungstag der Anmeldung: 06.03.2002
(73) Patentinhaber: INSTITUT FÜR NEUE MATERIALIEN GEM. GMBH, 66123 Saarbrücken (DE)
(72) Erfinder: GROSS, Frank, D-66386 St Ingbert (DE); MENNIG, Martin, D-66287 Quierschied (DE); OLIVEIRA, Peter, W., D-66111 Saarbrücken (DE); SCHMIDT, Helmut, D-66130 Saarbrücken-Güdingen (DE); SEPEUR, Stefan, D-66787 Wadgassen-Schaffhausen (DE)
(74) Vertreter: Barz, Peter
(86) Internationale Anmeldenummer: EP0003425
(87) Internationale Veröffentlichungsnummer: WO00062942

(56) Entgegenhaltungen:
- EP-A- 0 484 886
- EP-A- 0 501 298
- EP-A- 0 548 997
- WO-A-92/21729
- WO-A-93/06508
- US-A- 4 751 171
- US-A- 5 264 731
- US-A- 5 266 222
- US-A- 5 268 211

## Beschreibung

Die vorliegende Erfindung betrifft mit einer mikrostrukturierten Oberfläche versehene Substrate, Verfahren zu deren Herstellung und deren Verwendung als sogenannte Easy-to-clean-Systeme mit schmutzabweisenden Eigenschaften.

Die Reinigung von Oberflächen ist zeit- und kostenintensiv, und es ist daher von hohem wirtschaftlichen Interesse, Oberflächen schmutzabweisende Eigenschaften zu verleihen. Haftmechanismen werden in der Regel durch grenzflächenenergetische Parameter zwischen den beiden sich berührenden Oberflächen bedingt. In der Regel versuchen dabei die Systeme, ihre freie Grenzflächenenergie zu erniedrigen, was im allgemeinen durch polare oder chemische Wechselwirkungen. Liegen die freien Grenzflächenenergien zwischen zwei Komponenten von sich aus schon sehr niedrig, so kann allgemein davon ausgegangen werden, daß die Haftung zwischen diesen beiden Komponenten schwach ausgeprägt ist, weil die Summe der niedrigen freien Grenzflächenenergien niedrig ist. Wichtig ist dabei die relative Erniedrigung der freien Grenzflächenenergie. Bei Paarungen mit einer hohen und einer niedrigen Grenzflächenenergie kommt es sehr auf die Möglichkeiten der Wechselwirkung an. So ist es beispielsweise beim Aufbringen von Wasser auf hydrophobe Oberflächen nicht möglich, eine merkliche Erniedrigung der Grenzflächenenergie herbeizuführen. Dies ist daran erkennbar, daß die Benetzung (Bestimmung des Grenzflächenwinkels Θ am Tripelpunkt) schlecht ist. Perfluorierte Kohlenwasserstoffe, z. B. Teflon, haben eine sehr niedrige Grenzflächenenergie, gleichzeitig aber kaum Möglichkeiten der Wechselwirkung mit irgendwelchen anderen Stoffen, seien diese polar oder unpolar. Somit haften auf solchen Oberflächen kaum irgendwelche Komponenten bzw. auf solchen Oberflächen abgelagerte Komponenten können sehr leicht wieder entfernt werden. Dieser schmutzabweisende Effekt wird auch als "Easy-to-clean-Effekt" bezeichnet.

Allerdings ist es mit solchen Anordnungen nicht möglich, die Van-der-Waalsschen Wechselwirkungen zu unterbinden, die generell immer wirksam sind. Damit wird die Anhaftung einer Komponente auf einer solchen Oberfläche im wesentlichen durch die Kontaktfläche definiert, d. h. je kleiner die Kontaktfläche, um so niedriger ist die Anhaftung.

Die Natur macht sich dieses Phänomen zunutze, um gegen Wasser recht niedrige Haftungen zu erzielen. So sind z. B. Kohlblätter oder auch Obst von kleinen Wachshügelchen bedeckt, die im Nichtbenetzungsfalle, und dies ist bei Wachs der Fall, die Van-der-Waals-Kontaktfläche eines Wassertropfens sehr stark heruntersetzen und damit in der Regel zu einem Abrollen der Wassertropfen führen. Sind in diese Wassertropfen Schmutz- oder Staubpartikel eingeschlossen, so rollen sie mit ab. Gegenüber benetzenden Komponenten wie Ölen oder Tensiden reagieren solche Oberflächen jedoch umgekehrt: Durch die Vergrößerung der Oberfläche wird die Van-der-Waals-Grenzfläche sehr stark vergrößert und die Haftung wird erhöht. Aus diesem Grund sind derartige Anordnungen in der Praxis nicht als Easy-to-clean-Systeme einsetzbar, da sie gegenüber Fetten und Ölen, die stark anhaftenden Schmutz bewirken, völlig ungeeignet sind und gerade wegen ihrer großen Oberfläche rasch verschmutzen. Daher ist der in jüngerer Zeit vielfach diskutierte "Lotus-Effekt" (auch auf Lotusblättern gibt es solche Wachsausscheidungen) zur Lösung dieses Problems nicht geeignet. Außerdem wäre die Abriebfestigkeit für praktische Zwecke unzureichend.

Der vorliegenden Erfindung liegt die Aufgabe zugrunde, mit einer mikrostrukturierten Oberfläche versehene Substrate bereitzustellen, die auch gegenüber benetzenden Komponenten wie Ölen, Fetten oder Tensiden schmutzabweisende Eigenschaften zeigen und als Easy-to-clean-Systeme in der Praxis einsetzbar sind.

EP-A-548 997 betrifft eine Halbleiter-Vorrichtung mit verbesserter Wasser- und Ölabstoßung, die auf der Oberfläche einen chemisch gebundenen Film aufweist, der Fluoralkylgruppen enthält. Dabei wird ein monomolekularer Film von Fluoralkylgruppen aufgetragen. Von einer Mikrostrukturierung ist nicht die Rede.

EP-A-501298 betrifft eine selbstschmierende Vorrichtung, die ebenfalls eine fluorhaltige Oberflächenschicht aus Silanen aufweist. Bei der Vorrichtung handelt es sich um Mikromaschinen. WO 93/06508 betrifft optische Elemente mit geprägter Oberflächenstruktur, die nanoskalige Teilchen mit einer Teilchengröße von 0,5 bis 20 nm aufweisen.

Gegenstand der Erfindung sind mit einer mikrostrukturierten Oberfläche versehene Substrate, deren Oberflächenschicht
(a) aus einer Zusammensetzung besteht, die Kondensate von einer oder mehreren hydrolysierbaren Verbindungen mindestens eines Elements M ausgewählt aus Si, Al, B, Pb, Sn, Ti, Zr, V, Zn oder Mischungen aus zwei oder mehreren dieser Elemente und gegebenenfalls mindestens eines weiteren Elements M aus den Hauptgruppen III bis V und/oder den Nebengruppen II bis IV des Periodensystems der Elemente enthält, wobei zumindest ein Teil dieser Verbindungen neben hydrolysierbaren Gruppen A auch nicht hydrolysierbare kohlenstoffhaltige Gruppen B aufweist und das Gesamt-Molverhältnis von Gruppen A zu Gruppen B in den zugrundeliegenden monomeren Ausgangsverbindungen 10:1 bis 1:2 beträgt, wobei 0,1 bis 100 Mol-% der Gruppen B Gruppen B' sind, die durchschnittlich 5 bis 30 Fluoratome aufweisen, die an ein oder mehrere aliphatische Kohlenstoffatome gebunden sind, welche durch mindestens zwei Atome von M getrennt sind, und
(b) eine Mikrostrukturierung solcher Art aufweist, daß der Kontaktwinkel gegen Wasser oder Hexadecan mindestens 5° höher liegt als der Kontaktwinkel einer entsprechenden glatten Oberfläche.

Gegenstand der Erfindung ist femer ein Verfahren zur Herstellung solcher mit einer mikrostrukturierten Oberfläche versehenen Substrate, das dadurch gekennzeichnet ist, daß entweder
a) die auf das Substrat aufgetragene Beschichtungszusammensetzung für die Oberflächenschicht vor oder während ihrer Trocknung und/oder Härtung mit einem Prägestempel geprägt wird, der eine unpolare und/oder niedrig-energetische Oberfläche aufweist, oder
b) in der Oberflächenschicht-Zusammensetzung nanoskalige anorganische Feststoff-Teilchen oder Agglomerate mit einer Partikelgröße von mindestens 50 nm vorhanden sind.

Die erfindungsgemäßen, mit einer mikrostrukturierten Oberfläche versehenen Substrate eignen sich als Easy-to-clean-Systeme und können selbst bei Verschmutzung durch öl-, fett- oder tensidhaltige Substanzen durch einfaches Spülen mit reinem Wasser wieder vollständig regeneriert werden. Ein weiterer wesentlicher Vorteil ist darin zu sehen, daß transparente oder transluzente Oberflächenschichten hergestellt werden können.

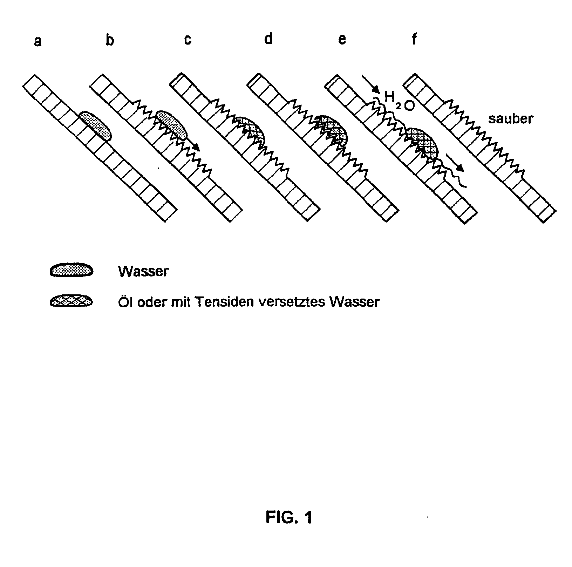

Figur 1 zeigt die Hafteigenschaften verschiedener Substanzen an einer Oberfläche in Abhängigkeit von deren Zusammensetzung und Struktur. Dabei stellen die nicht schraffierten Tropfen einen Wassertropfen ohne Inhaltsstoffe und die schraffierten Tropfen Öl oder mit Tensiden versetztes Wasser dar.

So zeigt Figur 1, daß ein Wassertropfen auf einer hydrophoben Oberfläche haftet (a), aber auf einer mikrostrukturierten hydrophoben Oberfläche abrollt (b). Ein Öloder Tensid/H₂O-Tropfen haftet auf einer mikrostrukturierten hydrophoben Oberfläche sehr fest und kann mit Wasser nicht entfernt werden (c). Dagegen haftet ein Öl- oder Tensid/H₂O-Tropfen auf einer erfindungsgemäßen mikrostrukturierten Oberfläche schwächer (d) und läßt sich mit reinem Wasser leicht entfemen (e). In (f) ist eine saubere Oberfläche dargestellt.

Unter einer mikrostrukturierten Oberfläche wird hier allgemein eine Oberfläche verstanden, die in einem beobachteten, kleinen Flächenelement nicht glatt und eben ist, sondern Erhöhungen (Pixel) oder Vertiefungen aufweist. Beispielsweise können pro Quadratmillimeter Oberfläche mehrere Tausend bis mehrere Millionen Pixel mit einer Strukturhöhe von z.B. 20 Nanometern oder mehr bis zu einem oder mehreren (z.B. 4) Mikrometern vorhanden sein (gemessen durch Atom-Kraft-Mikroskopie - AFM). Der Pixelabstand kann hierbei beispielsweise 50 bis 100 oder mehrere Hundert nm betragen. Die Mikrostrukturierung kann aber auch z.B. in Form von aus der Oberfläche hervorstehenden Whiskem vorliegen.

Benetzung ist die Fähigkeit von Flüssigkeiten, mit Festkörpern einer Grenzfläche auszubilden. Die Benetzungstendenz läßt sich aus dem Kontaktwinkel (Randwinkel) ableiten, der sich zwischen Flüssigkeit und Festkörper bildet. Je größer der Kontaktwinkel, umso kleiner ist die Benetzungstendenz der Flüssigkeit für den Festkörper.

Die Oberfläche der erfindungsgemäßen Substrate weist eine Mikrostrukturierung solcher Art auf, daß der Kontaktwinkel sowohl gegen Wasser als auch Hexadecan mindestens 5°, vorzugsweise mindestens 10°, höher liegt als der Kontaktwinkel einer entsprechenden glatten Oberfläche. Hierbei beträgt der Kontaktwinkel der mikrostrukturierten Oberfläche gegen Wasser vorzugsweise mindestens 120°, der Kontaktwinkel gegen Hexadecan vorzugsweise mindestens 70°. Erfindungsgemäß ist es überraschenderweise möglich, Kontaktwinkel gegen Wasser von bis zu 170° und mehr und gleichzeitig bisher unerreichte Kontaktwinkel gegen Hexadecan von bis zu 120° und mehr zu erzielen.

Die erfindungsgemäß eingesetzte Beschichtungszusammensetzung kann auf praktisch jedes beliebige Substrat aufgebracht werden. Beispiele dafür sind Metalle, Glas, Holz, Papier, Textilien, Teppiche, Keramik, Kunststoffe, aber auch Baustoffe wie Gipse, Estriche, Zemente, Putze, Ziegel, (Natur)Steine, poröse Baustoffe, Isolierwerkstoffe sowie Schüttgüter, Pulver, Granulate etc. Als Beispiele für Metalle seien z.B. Kupfer, Aluminium, Messing, Eisen und Zink genannt. Unter den als Kunststoffen verwendeten Polymeren verdienen insbesondere transparente Polymere wie Polycarbonat, Polymethylmethacrylat, Polyacrylate, Polyethylenterephthalat Erwähnung, aber auch alle anderen technischen Thermoplaste, Duroplaste und Elastomere sowie Folien. Natürlich eignen sich auch oberflächen behandelte (z.B. lackierte oder sandgestrahlte) Substrate zur Herstellung mikrostrukturierter Oberflächen, beispielsweise lackierte Haushalts- oder medizintechnische Geräte. Die Beschichtungszusammensetzung wird bevorzugt auf glatte Oberflächen aufgetragen, jedoch kann die Mikrostrukturierung auch auf rauhen, d.h. selbst strukturierten Substratoberflächen erzeugt werden, indem durch die erfindungsgemäße Oberflächenschicht eine Überstruktur gebildet wird.

Als Beschichtungszusammensetzungen eignen sich insbesondere die in der WO 92/21729 beschriebenen Zusammensetzungen. Es wird daher hiermit auf die in dieser Anmeldung beschriebenen Beschichtungszusammensetzungen bzw. Polykondensate und deren Herstellung ausdrücklich Bezug genommen. Bevorzugt werden die fluorierten Ausgangsverbindungen aber nicht, wie dort beschrieben, nach der Bildung von Vorkondensaten aus nicht-fluorierten Ausgangsverbindungen zugegeben, sondern die Ausgangsverbindungen werden vorzugsweise gemeinsam hydrolysiert und kondensiert.

Bei den zur Herstellung der Beschichtungszusammensetzung verwendeten hydrolysierbaren Ausgangsverbindungen handelt es sich um solche von Si, Al, B, Pb, Sn, Ti, Zr, V oder Zn, insbesondere solche von Si, Al, Ti oder Zr, oder Mischungen aus zwei oder mehreren dieser Elemente und gegebenenfalls mindestens eines weiteren Elements M aus den Hauptgruppen III bis V und/oder den Nebengruppen II bis IV des Periodensystems der Elemente. Hierzu sei angemerkt, daß selbstverständlich auch andere hydrolysierbare Verbindungen eingesetzt werden können, insbesondere solche von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthaniden können eingesetzt werden. Vorzugsweise machen die soeben genannten Verbindungen aber nicht mehr als 20 und insbesondere nicht mehr als 10 Mol-% der insgesamt eingesetzten hydrolysierbaren monomeren Verbindungen aus. Bei Einsatz hochreaktiver hydrolysierbarer Verbindungen (z.B. Aluminumverbindungen) empfiehlt sich die Verwendung von Komplexbildnern, die eine spontane Ausfällung der entsprechenden Hydrolysate nach Zugabe von Wasser verhindern. In der WO 92/21729 sind geeignete Komplexbildner genannt, die bei reaktiven hydrolysier-baren Verbindungen eingesetzt werden können.

Für Beispiele für hydrolysierbare Gruppen A in den Ausgangsverbindungen (die nicht notwendigerweise als monomere Verbindungen, sondern bereits als entsprechende Vorkondensate von Verbindungen eines oder mehrerer der Elemente M eingesetzt werden können) sowie für nicht-hydrolysierbare Gruppen B bzw. B' wird auf die oben genannte WO 92/21729 verwiesen.

Besonders bevorzugte nicht hydrolysierbare Gruppen B sind neben den in der WO 92/21729 genannten, die über mindestens eine ungesättigte, polymerisierbare Gruppe verfügen, auch solche, die mindestens eine andere funktionelle Gruppe aufweisen, über die eine Vernetzung der Kondensate möglich ist. Bei diesen funktionellen Gruppen kann es sich beispielsweise um Hydroxy, Epoxy- oder gegebenenfalls substituierte Aminogruppen handeln. Bevorzugt sind dabei Epoxygruppen, insbesondere Glycidyloxy-C₁₋₄-Alkylgruppen wie Glycidyloxypropyl. Als Gruppen, die ungesättigte Kohlenstoff-Kohlenstoff-Bindungen enthalten, seien Gruppen genannt, die über ein (Meth)acryloxyrest, insbesondere über einen (Meth)acryloxy-C₁₋₄-Alkylrest wie (Meth)acryloxypropyl, verfügen.

Erfindungsgemäß wird es bevorzugt, wenn das Gesamtmolverhältnis von Gruppen A zu Gruppen B in allen Ausgangsverbindungen (einschließlich der fluorierten) 10:1 bis 1:2, bevorzugt 8:1 bis 1:1 und insbesondere 7:1 bis 2:1 beträgt. Dabei ist zu berücksichtigen, daß sich dieses Verhältnis auf monomere Ausgangsverbindungen bezieht, d.h. bei eingesetzten Vorkondensaten entsprechend umgerechnet werden muß.

Spezielle Beispiele für nicht-fluorierte und fluorierte hydrolysierbare Verbindungen sind in der WO 92/21729 genannt. Insbesondere die erfindungsgemäß einsetzbaren Siliciumverbindungen lassen sich ganz oder teilweise in Form von Vorkondensaten einsetzen, d.h. Verbindungen, die durch teilweise Hydrolyse der entsprechenden monomeren Verbindungen, entweder allein oder im Gemisch mit hydrolysierbaren Verbindungen anderer Elemente entstanden sind.

In den erfindungsgemäß eingesetzten Beschichtungszusammensetzungen können alle, zumindest jedoch 0,1 Mol-% der an die Elemente M gebundenen nicht-hydrolysierbaren Gruppen B Gruppen B' sein, die im Durchschnitt 5 bis 30 Fluoratome aufweisen, welche an ein oder mehrere aliphatische (einschließlich cycloaliphatische) Kohlenstoffatome gebunden sind, die durch mindestens zwei Atome von M getrennt sind. Vorzugsweise sind 1 bis 50 und insbesondere 2 bis 30 Mol-% der Gruppen B Gruppen B', wobei ein besonders bevorzugter Prozentsatz im Bereich von 5 bis 25 Mol-% liegt.

Vorzugsweise enthalten die Gruppen B' im Durchschnitt 5 bis 25 und insbesondere 8 bis 18 Fluoratome, die an aliphatische Kohlenstoffatome gebunden sind, wobei diejenigen Fluoratome nicht berücksichtigt sind, die gegebenenfalls in anderer Weise, z.B. an aromatische Kohlenstoffatome, gebunden sind (z.B. im Falle von C₆F₄). Bei der fluorhaltigen Gruppe B' kann es sich auch um einen Chelatliganden handeln. Ebenso ist es möglich, daß sich ein oder mehrere Fluoratome an einem Kohlenstoffatom befinden, von dem eine Doppel- oder Dreifachbindung ausgeht. Da die Gruppe B' nur im Durchschnitt fünf entsprechende Fluoratome aufweisen müssen, können auch Gruppen B' eingesetzt werden, die über nur 1 Fluoratom verfügen, wenn gleichzeitig genügend Gruppen B' vorhanden sind, die mehr als 5 Fluoratome aufweisen.

Insbesondere wenn sich unter den Gruppen B in den Kondensaten der Beschichtungszusammensetzung solche mit ungesättigten Kohlenstoff-Kohlenstoff-Bindungen oder ebenfalls zur Vemetzung der Kondensate geeigneten funktionellen Gruppen befinden, enthält die erfindungsgemäße Beschichtungszusammensetzung vorzugsweise auch einen Katalysator für eine thermische und/oder photochemisch induzierte Härtung. Beispiele für Menge und Art der Katalysatoren bei ungesättigten Kohlenstoff-Kohlenstoff-Bindungen sind in der WO 92/21729 beschrieben. Bevorzugt sind dabei Photopolymerisationsinitiatoren als Katalysatoren. Die genannten Mengen und Arten können auch bei Vorliegen anderer funktioneller Gruppen eingesetzt werden. Bei Anwesenheit von Epoxidgruppen kann z.B. auch Cyracure® (hergestellt von Union Carbide) als Katalysator eingesetzt werden.

Die Herstellung der Beschichtungszusammensetzung erfolgt in der auf diesem Gebiet üblichen Art und Weise. Werden am Anfang überwiegend (bei der Hydrolyse relativ reaktionsträge) Siliciumverbindungen eingesetzt, kann die Hydrolyse in den meisten Fällen dadurch erfolgen, daß man der oder den zu hydrolysierenden Siliciumverbindungen, die entweder als solche oder gelöst in einem geeigneten Lösungsmittel vorliegen, Wasser bei Raumtemperatur oder unter leichter Kühlung direkt zugibt (vorzugsweise unter Rühren) und die resultierende Mischung daraufhin einige Zeit (einige Minuten bis einige Stunden) rührt. Bei Anwesenheit der reaktiveren Verbindungen von z.B. Al, Ti und Zr empfiehlt sich in der Regel eine stufenweise Zugabe des Wassers. Unabhängig von der Reaktivität der anwesenden Verbindungen erfolgt die Hydrolyse in der Regel bei einer Temperatur nicht über 50°C, vorzugsweise zwischen 0°C und 30°C. Insbesondere bei den weniger reaktiven hydrolysierbaren Ausgangsverbindungen können auch Kondensationskatalysatoren eingesetzt werden. Dabei handelt es sich z.B. um Basen oder bevorzugt um Säuren.

Prinzipiell muß kein Lösungsmittel eingesetzt werden, insbesondere dann, wenn es sich bei den hydrolysierbaren Gruppen A um solche handelt, die bei der Hydrolyse zur Bildung von (niederen) Alkoholen, wie z.B. Methanol, Ethanol; Propanol und Butanol führen. Andernfalls (z.B. bei Verwendung von Halogensilanen) sind geeignete Lösungsmittel z.B. die soeben genannten Alkohole sowie Ether, vorzugsweise niedere Dialkylether wie Diethylether und Dibutylether und THF, aromatische Kohlenwasserstoffe (z.B. Toluol), Ester wie Essigsäureethylester, und insbesondere Butoxyethanol. Selbstverständlich kann ein Lösungsmittel auch eingesetzt werden, wenn die Hydrolyse ausschließlich zu (niederen) Alkohlen als Nebenprodukt führt.

Bezüglich der insgesamt für die Hydrolyse zu verwendenden Wassermenge sei bemerkt, daß es besonders bevorzugt ist, wenn das Molverhältnis von gesamtem zugegebenem Wasser zu hydrolysierbaren Gruppen A in allen eingesetzten Ausgangsverbindungen im Bereich von 3:1 bis 0,2:1, insbesondere 2:1 bis 0,3:1 liegt. Daneben kann auch das spezielle in der WO 92/21729 beschriebene Verfahren angewandt werden.

Insbesondere wenn die Gruppen B bzw. B' mindestens eine Kohlenstoff-Kohlenstoff-Doppel- oder Dreifachbindung und/oder eine andere funktionelle Gruppe aufweisen, über die eine Vernetzung der Kondensate möglich ist, ist es zweckmäßig, daß auch ein oder mehrere organische Verbindungen mit mindestens einer Kohlenstoff-Kohlenstoff-Doppel- oder Dreifachbindung oder mindestens einer funktionellen Gruppe, über die eine Vemetzung der Kondensate möglich ist, in der Beschichtungszusammensetzung enthalten sind. Beispiele für derartige organische Verbindungen sind Verbindungen mit Acryloxy-, Methacryloxy-, Glycidyloxy-, Epoxid-, Hydroxyl- und/oder Aminogruppe. Die organische Verbindung weist bevorzugt ein oder zwei derartige Gruppen auf.

Beispiele für organische Verbindungen, die eingesetzt werden können, wenn die Gruppen B bzw. B' mindestens eine Kohlenstoff-Kohlenstoff-Doppel- oder Dreifachbindung enthalten, sind Styrol, Acrylsäure, Methacrylsäure und deren Derivate (z. B. Ester, Amide, Nitrile). Diese organischen Verbindungen können zusätzlich weitere funktionellen Gruppen, beispielsweise OH-Gruppen tragen.

Beispiele für organische Verbindungen, die eingesetzt werden können, wenn die Gruppen B bzw. B' mindestens eine funktionelle Gruppe aufweisen, über die eine Vemetzung der Kondensate möglich sind, sind zum Beispiel aliphatische Diepoxide mit 5 bis 30 Kohlenstoffatomen oder cycloaliphatische oder aromatische Diepoxide mit 10 bis 40 Kohlenstoffatomen.

Insbesondere wenn die Herstellung der Beschichtungszusammensetzung ohne Lösungsmittel und unter Wasserzugabe im unteren Bereich des erfindungsgemäß bevorzugten Bereichs erfolgt, kann es erforderlich sein, die Beschichtungszusammensetzung vor dem Auftragen mit einem geeigneten organischen Lösungsmittel zu verdünnen. Für diesen Zweck besonders geeignet sind Toluol, Essigester, THF, Glycolsäurebutylester, Butoxyethanol, Ethylenglycolmono- und - diethylether und Mischungen derselben. Wird die Beschichtungszusammensetzung mit einem Lösungsmittel verdünnt, so liegt das Mengenverhältnis von Lackkomponenten (ohne Nanopartikel) zu Lösungsmittel vorzugsweise im Bereich von 1:0,5 bis 1:2.

Ist die Aushärtung der Beschichtungszusammensetzung durch Bestrahlung beabsichtigt, so muß der Beschichtungszusammensetzung vor deren Auftrag noch ein Photoinitiator zugesetzt werden. Vorzugsweise wird ein Initiator auch zugesetzt, wenn die Aushärtung auf thermischem Wege erfolgen soll.

Zur Herstellung der mikrostrukturierten Oberfläche können der Beschichtungszusammensetzung für die Oberflächenschicht oder einem Ausgangsmaterial oder Zwischenprodukt davon nanoskalige anorganische Feststoff-Teilchen mit einer Partikelgröße von mindestens 50 nm (Nanopartikel) zugesetzt werden. Die Zugabe erfolgt vor dem Auftrag der Beschichtungszusammensetzung auf das Substrat. Dabei können die Nanopartikel zu der fertigen Beschichtungszusammensetzung oder bereits zu den hydrolysierbaren Ausgangsverbindungen vor der Hydrolyse oder zu einem dazwischenliegenden Zeitpunkt, also einem Vorprodukt, gegeben werden.

Die nanoskaligen anorganischen Feststoffteilchen, wie sie z. B. in der WO 93/06508 beschrieben sind, können aus beliebigen Materialien bestehen; vorzugsweise bestehen sie jedoch aus Metallen und insbesondere aus Metallverbindungen wie beispielsweise (gegebenenfalls hydratisierten) Oxiden wie ZnO, CdO, SiO₂, TiO₂, ZrO₂, CeO₂, SnO₂, Al₂O₃ (insbesondere Boehmit), In₂O₃, La₂O₃, Fe₂O₃, Cu₂O, Ta₂O₅, Nb₂O₅, V₂O₅, MoO₃ oder WO₃; Chalkogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCl, AgBr, Agl, CuCl, CuBr, Cdl₂ und Pbl₂; Carbiden wie CdC₂ oder SiC; Arseniden wie AlAs, GaAs und GeAs; Antimoniden wie InSb; Nitriden wie BN, AIN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. solchen mit Perowskitstruktur wie BaTiO₃ und PbTiO₃). Die Nanopartikel können z. B. in Form von Pulvern oder Solen zugegeben werden. Sie können sphärisch, langgestreckt oder von beliebiger anderer Form sein.

Die eingesetzten Feststoffteilchen oder Agglomerate weisen eine Partikelgröße von mindestens 50 nm auf. Der Einsatz kleinerer Primärpartikel ist möglich, wenn sie in der Oberflächenschicht als Aggregate oder Agglomerate mit einer Partikelgröße von mindestens 50 nm vorliegen. Die Feststoffteilchen oder Agglomerate können z.B. eine Teilchengröße bis zu 10 µm, vorzugsweise bis zu 4 µm und besonders bevorzugt bis zu 1µm, aufweisen.

Der Kontaktwinkel gegenüber Wasser und Hexadecan und damit die Mikrostrukturierung der Oberfläche können z.B. über den Füllgrad, d.h. den Gehalt der Beschichtungszusammensetzung an Nanopartikeln innerhalb des gewünschten Bereichs eingestellt werden.

Nanopartikel dienen auch der Verbesserung der mechanischen Eigenschaften, insbesondere wird eine erhöhte Abrieb- und Kratzbeständigkeit der mikrostrukturierten Oberfläche erzielt.

Spätestens vor dem Auftrag der Beschichtungszusammensetzung können dieser gegebenenfalls noch übliche Lack-Additive zugegeben werden, wie z.B. Färbemittel, Füllstoffe, Oxidationsinhibitoren, Verlaufsmittel, UV-Absorber und dergleichen.

Die gegebenenfalls mit einem Initiator und anderen Additiven versehene Beschichtungszusammensetzung wird dann auf ein geeignetes Substrat aufgebracht. Für diese Beschichtung können übliche Beschichtungsverfahren Verwendung finden, z.B. Tauchen, Fluten, Ziehen, Gießen, Schleudern, Spritzen, Sprühen, Streichen, Walzen oder herkömmliche Drucktechniken. Besonders bevorzugt werden erfindungsgemäß das Sprühen, Spritzen und Schleudern.

Alternativ kann die mikrostrukturierte Oberfläche dadurch erhalten werden, daß man die auf das Substrat aufgetragene Beschichtungszusammensetzung vor oder während der Trocknung und/oder Härtung mit einem Prägestempel mit unpolarer und/oder niedrigenergetischer Oberfläche prägt.

Der Prägestempel weist eine unpolare und/oder niedrig-energetische Oberfläche auf. Auf diese Weise lassen sich überraschenderweise mit den erfindungsgemäß eingesetzten Beschichtungszusammensetzungen mikrostrukturierte Oberflächen mit einem hohen Kontaktwinkel herstellen. Üblicherweise wird nämlich bei der Prägung eine Mikrostruktur erhalten, die keine hohen Kontaktwinkel, sondern wesentlich kleinere Kontaktwinkel zeigt. Ohne an eine Theorie gebunden zu sein, wird angenommen, daß die fluorierten Seitengruppen der Beschichtungszusammensetzung bei der Prägung überraschenderweise nicht, wie sonst üblich, aufgrund ihrer thermodynamischen Wechselwirkung mit der Prägestempeloberfläche in das Substrat hineingedrückt werden, so daß der Gehalt an fluorierten Gruppen an der Oberfläche durch die Prägung überraschenderweise nicht abnimmt.

Bei dem Prägestempeln handelt es sich beispielsweise um einen Stempel aus Siliconkautschuk. Der Prägestempel weist auf seiner Oberfläche das Negativ der gewünschten Mikrostruktur auf.

Vor der Härtung wird die aufgetragene Beschichtungszusammensetzung vorzugsweise z.B. bei Raumtemperatur oder leicht erhöhter Temperatur getrocknet. Die Schichtdicke im getrockneten/gehärteten Zustand beträgt vorzugsweise mindestens 50 nm, besonders bevorzugt mindestens 200 nm und insbesondere mindestens 500 nm. Die Schichtdicke kann z.B. bis zu 100 µm, vorzugsweise bis zu 50 µm und insbesondere bis zu 20 µm betragen. Nach der gegebenenfalls vorgenommenen Trocknung kann die auf das Substrat aufgebrachte Beschichtungszusammensetzung abhängig von der Art bzw. Anwesenheit eines Initiators thermisch und/oder durch Bestrahlung (z.B. mit UV-, Laseroder Elektronenstrahlung) in an sich bekannter Weise gehärtet werden. Gegebenenfalls reicht aber eine einfache Trocknung (bei Raumtemperatur) aus, so daß keine weitere besondere Härtung durchgeführt werden muß.

Im Falle der thermischen Härtung liegen die Härtungstemperaturen vorzugsweise bei mindestens 50°C, insbesondere mindestens 90°C. Die maximale Härtungstemperatur wird u.a. auch von der thermischen Belastbarkeit des zu beschichtenden Substrats bestimmt. Im Falle von Glas oder Metallen können Härtungstemperaturen bis zu 350°C verwendet werden. Vorzugsweise werden jedoch Härtungstemperaturen von 200°C und insbesondere 180°C nicht überschritten. Die Härtungszeit beträgt in der Regel 1 bis 2 Stunden.

Die mit dem erfindungsgemäßen Verfahren erhältlichen mikrostrukturierten Oberflächen zeichnen sich insbesondere durch eine hervoragende Antihaftwirkung gegenüber den verschiedensten Verschmutzungen aus, insbesondere sind sie von Verschmutzungen wie Fetten und Ölen leicht zu reinigen, so daß sie in der Praxis als Easy-to-clean-Systeme einsetzbar sind.

Insbesondere unter Berücksichtigung ihrer guten Haftung auf Glas und ihrer Transparenz eignen sich die erfindungsgemäßen Beschichtungszusammensetzungen hervorragend zur Beschichtung von Gläsern, bei denen eine schmutz-, wasser- und ölabweisende Oberfläche wünschenswert ist, z.B. für die Beschichtung von (Außen-) Spiegeln von Kraftfahrzeugen, aber auch z.B. von Windschutzscheiben, oder von Metallen wie Aluminium. Weitere Anwendungsgebiete sind z. B. Kunststoffe und lackierte Oberflächen etwa im Automobilbereich.

Die folgenden Beispiele erläutern die Erfindung, ohne sie zu beschränken.

### Beispiel 1

Zu 80,96 g (0,2 mol) Zirkon(IV)-n-propylat (78,46 Gew.% in 1-Propanol) werden 17,17 g (0,2 mol) Methacrylsäure langsam unter Rühren zugegeben und 30 min gerührt (Lösung A). 248,11 g (1 mol) Methacryloxypropyltrimethoxysilan, 23,01 g (1,278 mol) H₂O dest. und 4 g (0,222 mol) 0,1 n HCl Lösung werden gemischt und 30 min lang gerührt (Lösung wird nach ca. 15 min einphasig). Unter Eis/Wasser-Kühlung wird innerhalb 20 min die zuvor präparierte Lösung A zugetropft und anschließend das Sol 60 min gerührt. Danach erfolgt eine Nachhydrolyse durch Zugabe von weiteren 5,37 g (0,298 mol) H₂O dest. Nach 60 min Rühren werden 10,208 g (0.02 mol) 1H,1H,2H,2H-Perfluoroctyltriethoxysilan (FTS) zugegeben und das Sol nochmals 1 h gerührt. Danach erfolgt nochmals die Zugabe von 0,554 g (0,031 mol) H₂O dest. Zuletzt werden 2,45 g (0,012 mol) Photoinitiator (Irgacure 184) zugegeben und nochmals 1 h gerührt.

Das Sol wird unverdünnt auf ein Glassubstrat aufgeschleudert (bei 1000 U/min) und im Vakuum bei 30 mbar mit einen Silikonstempel von 3 x 3 cm mit einer abgeformten Mottenaugenstruktur einer Periodizität von 280 nm geprägt (Vorlast 50 N, Prägelast 100 N) und während des Prägevorgangs 10 min mit UV-Licht ausgehärtet. Die resultierende mikrostrukturierte Beschichtung zeigt Strukturhöhen von 40 bis 70 nm (AFM-Messung), der Kontaktwinkel gegen Wasser beträgt 130°, der gegen Hexadecan 70°, die Transparenz im Wellenlängenbereich zwischen 400 und 700 nm liegt bei 95 %. Eine Vergleichsprobe, die ohne Prägung hergestellt wurde, zeigte einen Kontaktwinkel gegen Wasser von 105° und gegen Hexadecan von 50°.

### Beispiel 2

41,6 g (0,2 mol) Tetraethoxysilan (TEOS), 35,6 g (0,2 mol) Methyltriethoxysilan (MTEOS), 26,0 g (0.051 mol) 1 H, 1H,2H,2H-Perfluoroctyltriethoxysilan (FTS), 10,4 g wässriges Kieselsol (Fa. Bayer, Typ KS 300/30), 98,0 g Isopropanol und 81,0 g 40 gew.%-ige Ameisensäure werden in einem Becherglas 60 Minuten gerührt. Zu 50 g dieser Mischung wird eine Suspension von 40 g Isopropanol und 2 g nanoskaligem SiO₂ (34 Mol%, Aerosil MOX 80, Primärpartikelgröße 30 nm) zugegeben. In der Mischung sind Agglomerate von 100-500 nm Größe vorhanden (transmissionselektronenmikroskopische Aufnahme (TEM) und Ultrafine Particle Analyzer (UPA)).

Die Suspension wird durch Sprühen auf Glassubstrate appliziert und 1 h bei 350°C getrocknet. Von den Schichten werden die Kontaktwinkel mit der Tropfenmethode und Goniometer bestimmt. Die Rauhheiten Rₐ werden mit einem Raster-Kraft-Mikroskop (AFM, nm-Bereich) bzw. mit einem Profilometer (µm-Bereich) bestimmt. Bei der Vergleichsprobe wurde zu der Silanmischung nur Isopropanol zugesetzt.

| **Partikel** | **Kontaktwinkel Wasser** **[°]** | **Kontaktwinkel Hexadecan** **[°]** | **Aussehen, Rauhheit** |
|---|---|---|---|
| ohne (Vergleich) | 100 | 60 | gleichmäßig, Rₐ = 0,39 nm (AFM) |
| SiO₂ Aerosil MOX 80 | 165 | 84 | gleichmäßig, Rₐ = 890 nm (Profilometer) |

### Beispiel 3

10,4 g (0,05 mol) Tetraethoxysilan (TEOS), 8,9 g (0,05 mol) Methyltriethoxysilan (MTEOS), 5,1 g (0.01 mol) 1H, 1H,2H,2H-Perfluoroctyltriethoxysilan (FTS) und 6,0 g Ethanol werden in einem Becherglas 5 Minuten gerührt. Danach werden unter starkem Rühren 4,24 g 30 gew.%-ige Essigsäure zugesetzt. Das zunächst zweiphasige Reaktionsgemisch erwärmt sich innerhalb einiger Sekunden und wird unter Wärmeentwicklung einphasig. Nach einer Reaktionszeit von etwa 30 min wird in 20 g dieser Mischung ein nanoskaliges Pulver (Einwaage und Typ siehe folgende Tabelle) eingerührt, wobei sich transluzente (SiO₂) bis undurchsichtige (TiO₂) Suspensionen bilden. In den Suspensionen sind die Primärpartikel zu Teilchen von 100-500 nm Größe agglomeriert (transmissionselektronenmikroskopische Aufnahme (TEM) und Ultrafine Particle Analyzer (UPA)).

Die Suspensionen werden über Spincoating auf Glas- und Aluminiumsubstrate appliziert und 1 h bei 250°C getrocknet.

| **Partikel** **(g zu 20g Mischung)** | **Kontaktwinkel Wasser** **[°]** | **Kontaktwinkel Hexadecan** **[°]** | **Aussehen** |
|---|---|---|---|
| ohne Partikel (Vergleich) | 105-110 | 60-65 | transparent, gleichmäßig |
| 0.5 g TiO₂ | 155-160 | 80-85 | transluzent, gleichmäßig |
| 8.6 g TiO₂ | 160-170 | 80-85 | transluzent, gleichmäßig |
| 0.19 g SiO₂ (Aerosil R812) | 140 | 100-105 | transluzent, gleichmäßig |
| 0.38 g SiO₂ (Aerosil R812) | 140-145 | 100-105 | transluzent, gleichmäßig |
| 0.19 g SiO₂ (Aerosil R974) | 145-150 | 105-110 | transluzent, gleichmäßig |
| 0.38 g SiO₂ (Aerosil R974) | 155 | 115-120 | transluzent, gleichmäßig |

## Patentansprüche

1. Mit einer mikrostrukturierten Oberfläche versehene Substrate, deren Oberflächenschicht
(a) aus einer Zusammensetzung besteht, die Kondensate von einer oder mehreren hydrolysierbaren Verbindungen mindestens eines Elements M ausgewählt aus Si, Al, B, Pb, Sn, Ti, Zr, V, Zn oder Mischungen aus zwei oder mehreren dieser Elemente und gegebenenfalls mindestens eines weiteren Elements M aus den Hauptgruppen III bis V und/oder den Nebengruppen II bis IV des Periodensystems der Elemente enthält, wobei zumindest ein Teil dieser Verbindungen neben hydrolysierbaren Gruppen A auch nicht hydrolysierbare kohlenstoffhaltige Gruppen B aufweist und das Gesamt-Molverhältnis von Gruppen A zu Gruppen B in den zugrundeliegenden monomeren Ausgangsverbindungen 10:1 bis 1:2 beträgt, wobei 0,1 bis 100 Mol-% der Gruppen B Gruppen B' sind, die durchschnittlich 5 bis 30 Fluoratome aufweisen, die an ein oder mehrere aliphatische Kohlenstoffatome gebunden sind, welche durch mindestens zwei Atome von M getrennt sind, und
(b) eine Mikrostrukturierung solcher Art aufweist, daß der Kontaktwinkel gegen Wasser oder Hexadecan mindestens 5° höher liegt als der Kontaktwinkel einer entsprechenden glatten Oberfläche.

2. Mit einer mikrostrukturierten Oberfläche versehene Substrate nach Anspruch 1, worin die Elemente M aus Si, gegebenenfalls in Kombination mit Al und/oder Ti und/oder Zr, ausgewählt sind.

3. Mit einer mikrostrukturierten Oberfläche versehene Substrate nach Anspruch 1 oder Anspruch 2, worin 1 bis 100 Mol-% der Gruppen B (einschließlich der Gruppen B') mindestens eine ungesättigte, polymerisierbare Gruppe aufweisen.

4. Mit einer mikrostrukturierten Oberfläche versehene Substrate nach einem der Ansprüche 1 bis 3, worin die Oberflächenschicht-Zusammensetzung außerdem Polymerisationsprodukte von radikalisch polymerisierbaren Monomeren enthält.

5. Mit einer mikrostrukturierten Oberfläche versehene Substrate nach einem der Ansprüche 1 bis 4, worin der Kontaktwinkel der mikrostrukturierten Oberfläche gegen Wasser oder Hexadecan mindestens 10° höher liegt als der Kontaktwinkel einer entsprechenden glatten Oberfläche.

6. Mit einer mikrostrukturierten Oberfläche versehene Substrate nach einem der Ansprüche 1 bis 5, worin der Kontaktwinkel der mikrostrukturierten Oberfläche gegen Wasser mindestens 120° beträgt.

7. Mit einer mikrostrukturierten Oberfläche versehene Substrate nach einem der Ansprüche 1 bis 6, worin der Kontaktwinkel der mikrostrukturierten Oberfläche gegen Hexadecan mindestens 70° beträgt.

8. Verfahren zur Herstellung eines mit einer mikrostrukturierten Oberfläche versehenen Substrats nach einem der Ansprüche 1 bis 7, **dadurch gekennzeichnet, daß** entweder
a) die auf das Substrat aufgetragene Beschichtungszusammensetzung für die Oberflächenschicht vor oder während ihrer Trocknung und/oder Härtung mit einem Prägestempel geprägt wird, der eine unpolare und/oder niedrig-energetische Oberfläche aufweist, oder
b) in der Oberflächenschicht-Zusammensetzung nanoskalige anorganische Feststoff-Teilchen oder Agglomerate mit einer Partikelgröße von mindestens 50 nm vorhanden sind.

9. Verwendung der mit einer mikrostrukturierten Oberfläche versehenen Substrate nach einem der Ansprüche 1 bis 7 als Easy-to-clean-Systeme, insbesondere als transparente oder transluzente Easy-to-clean-Systeme.

## Claims

1. Substrates which are provided with a microstructured surface and whose surface layer
(a) consists of a composition containing condensates of one or more hydrolysable compounds of at least one element M selected from Si, Al, B, Pb, Sn, Ti, Zr, V, Zn or mixtures of two or more of these elements and, optionally, at least one further element M from main groups III to V and/or transition groups II to IV of the Periodic Table of the Elements, at least some of these compounds containing not only hydrolysable groups A but also non-hydrolysable, carbon-containing groups B and the total molar ratio of groups A to groups B in the parent monomeric starting compounds being from 10:1 to 1:2, from 0.1 to 100 mol% of the groups B being groups B' containing on average from 5 to 30 fluorine atoms which are attached to one or more aliphatic carbon atoms distanced from M by at least two atoms, and
(b) has a microstructuring of such kind that the contact angle with respect to water or hexadecane is at least 5° higher than the contact angle of a corresponding smooth surface.

2. Substrates provided with a microstructured surface according to Claim 1, wherein the elements M are selected from Si, alone or in combination with Al and/or Ti and/or Zr.

3. Substrates provided with a microstructured surface according to one of Claims 1 or 2, wherein from 1 to 100 mol% of the groups B (including the groups B') contain at least one unsaturated, polymerizable group.

4. Substrates provided with a microstructured surface according to one of Claims 1 to 3, wherein the surface layer composition further comprises polymerization products of free-radical polymerizable monomers.

5. Substrates provided with a microstructured surface according to one of Claims 1 to 4, wherein the contact angle of the microstructured surface with respect to water or hexadecane is at least 10° higher than the contact angle of a corresponding smooth surface.

6. Substrates provided with a microstructured surface according to one of Claims 1 to 5, wherein the contact angle of the microstructured surface with respect to water is at least 120°.

7. Substrates provided with a microstructured surface according to one of Claims 1 to 6, wherein the contact angle of the microstructured surface with respect to hexane is at least 70°.

8. Method of producing such substrates provided with a microstructured surface, according to one of Claims 1 to 7, **characterized in that** either
(a) the coating composition applied to the substrate for the surface layer, before or during its drying and/or curing, is embossed with an embossing die which has a non-polar and/or low-energy surface, or
(b) the surface-layer composition includes nanoscale inorganic particulate solids or agglomerates having a particle size of at least 50 nm.

9. Use of the substrates provided with a microstructured surface according to one of Claims 1 to 7 as easy-to-clean systems, in particular as transparent or translucent easy-to-clean systems.

## Revendications

1. Substrats munis d'une surface microstructurée, dont la couche superficielle :
(a) est constituée d'une composition qui contient des produits de condensation d'un ou plusieurs dérivés hydrolysables d'au moins un élément M choisi parmi Si, Al, B, Pb, Sn, Ti, Zr, V et Zn ou de mélanges de deux ou plus de ces éléments, et éventuellement d'au moins un autre élément M pris dans les groupes principaux III à V et/ou les groupes secondaires II à IV du système périodique des éléments, au moins une partie de ces dérivés présentant également, outre des groupes hydrolysables A, des groupes carbonés non-hydrolysables B et le rapport molaire global des groupes A aux groupes B étant dans les composés de départ monomères de base de 10 :1 à 1 :2, 0,1 à 100 % en moles des groupes B étant des groupes B' qui contiennent en moyenne 5 à 30 atomes de fluor qui sont liés à un ou plusieurs atomes de carbone aliphatiques qui sont séparés par au moins deux atomes de M, et
(b) présente une microstructure d'un type tel que l'angle de contact avec l'eau ou l'hexadécane est plus élevé d'au moins 5 ° que l'angle de contact pour une surface lisse correspondante.

2. Substrats munis d'une surface microstructurée selon la revendication 1, pour lesquels les éléments M sont choisis parmi Si, éventuellement en combinaison avec Al et/ou Ti et/ou Zr.

3. Substrats munis d'une surface microstructurée selon la revendication 1 ou 2, pour lesquels 1 à 100 % en moles des groupes B (y compris les groupes B') contiennent au moins un groupe polymérisable insaturé.

4. Substrats munis d'une surface microstructurée selon l'une quelconque des revendications 1 à 3, pour lesquels la composition de la couche superficielle contient en outre des produits de polymérisation de monomères polymérisables par voie radicalaire.

5. Substrats munis d'une surface microstructurée selon l'une quelconque des revendications 1 à 4, pour lesquels l'angle de contact de la surface microstructurée avec l'eau ou l'hexadécane est plus élevé d'au moins 10 ° que l'angle de contact pour une surface lisse correpondante.

6. Substrats munis d'une surface microstructurée selon l'une quelconque des revendications 1 à 5, pour lesquels l'angle de contact de la surface microstructurée avec l'eau atteint au moins 120°.

7. Substrats munis d'une surface microstructurée selon l'une quelconque des revendications 1 à 6, pour lesquels l'angle de contact de la surface microstructurée avec l'hexadécane atteint au moins 70°.

8. Procédé de préparation d'un substrat muni d'une surface microstructurée selon l'une quelconque des revendications 1 à 7, **caractérisé en ce que** :
a) la composition de revêtement appliquée sur le substrat pour la couche superficielle est estampée, avant ou pendant son séchage et/ou son durcissement, avec une étampe qui présente une surface non-polaire et/ou faiblement énergétique, ou bien
b) dans la composition pour la couche superficielle sont présentes des particules ou des agglomérats de matière solide et minérale, de l'ordre de grandeur du nanomètre, ayant une taille de particule d'au moins 50 nm.

9. Utilisation des substrats munis d'une surface microstructurée selon l'une quelconque des revendications 1 à 7, comme systèmes faciles à nettoyer, en particulier comme systèmes faciles à nettoyer, transparents ou translucides.
